# EUROPÄISCHE PATENTSCHRIFT

(11) **EP 3 673 564 B1**
(45) Veröffentlichungstag und Bekanntmachung des Hinweises auf die Patenterteilung: **24.09.2025**
(21) Anmeldenummer: 18759067.4
(22) Anmeldetag: 14.08.2018
(51) Int. Cl.: H02K 3/12, H02K 3/22, H02K 3/02, H02K 9/19

(54) **WICKLUNGSSTÜCK UND ELEKTRISCHE MASCHINE MIT EINEM SOLCHEN WICKLUNGSSTÜCK**
WINDING PIECE AND ELECTRIC MACHINE HAVING SUCH A WINDING PIECE
PIÈCE D'ENROULEMENT ET MACHINE ÉLECTRIQUE COMPRENANT UNE PIÈCE D'ENROULEMENT DE CE TYPE

(30) Priorität: 21.08.2017 DE 102017119033
(43) Veröffentlichungstag der Anmeldung: 01.07.2020
(73) Patentinhaber: dynamic E flow GmbH, 83626 Valley (DE)
(72) Erfinder: SCHWEINERT, Nikolaus, 87600 Kaufbeuren (DE)
(74) Vertreter: Keilitz, Wolfgang
(86) Internationale Anmeldenummer: PCT/EP2018/072025
(87) Internationale Veröffentlichungsnummer: WO 2019/038139

(56) Entgegenhaltungen:
- WO-A1-2016/189192
- DE-T2- 69 830 869
- GB-A- 1 179 553
- GB-A- 2 202 170

## Beschreibung

Die Erfindung betrifft ein Wicklungsstück, insbesondere in Form einer Haarnadel, das dazu vorgesehen ist, in die Nuten eines Elektromotors eingesetzt zu werden, sowie eine elektrische Maschine mit solchen Wicklungsstücken.

### Hintergrund der Erfindung

Aus dem Stand der Technik sind innengekühlte elektrische Maschinen mit einer Wicklung bekannt, die aus einem elektrisch leitfähigen Hohldraht hergestellt ist. Der Hohldraht ist üblicherweise ein Runddraht mit einem in Längsrichtung durchgehenden Kanal, durch den ein Kühlmittel geleitet werden kann, um die elektrische Maschine zu kühlen. Dadurch lässt sich die Nennleitung solcher elektrischer Maschinen gegenüber herkömmlichen elektrischen Maschinen um ein Vielfaches steigern. Ein typischer innengekühlter Elektromotor mit einer Hohldrahtwicklung ist z. B. aus der WO 2015/150556 A9 bekannt.

Neben elektrischen Maschinen mit einer Wicklung aus Runddraht gibt es auch elektrische Maschinen, deren Wicklung in der sogenannten Pin- oder Hairpin-Technologie hergestellt ist. Pins oder Hairpins sind meist aus Kupfer hergestellte, starre Wicklungsstücke, die in die Nuten einer elektrischen Maschine eingesetzt werden. Im eingesetzten Zustand ragt an der Kopfseite des Stators ein Stück der Pins bzw. Haarnadeln aus den Nuten heraus. Die heraus ragenden Enden werden dann üblicherweise verschränkt und miteinander verschweißt, so dass eine vollständige Spule entsteht.

Aus dem Stand der Technik bekannte Pins sind meist stabförmige, starre Elemente, die ein rechteckiges Profil aufweisen. Haarnadeln umfassen in der Regel zwei Schenkel und einen gekrümmten Übergangsbereich, der die beiden Schenkel miteinander verbindet. Die Schenkel haben ein rechteckiges Profil, das an den Querschnitt der Nut angepasst ist.

Ein Elektromotor mit einem Wicklungsstück, das dazu vorgesehen ist, in eine Nut des Elektromotors eingesetzt zu werden, ist beispielsweise aus der GB 1 179 553 A, der US 9 515 530 B2 oder der DE 11 28 541 A bekannt. Die DE 698 30 869 T2 beschreibt ferner eine elektrische Maschine mit einem Wicklungsstück, das einen mittleren Abschnitt mit einem rechteckigen Profil und zwei Endabschnitte mit einem runden Profil aufweist. Das Wicklungsstück ist in diesem Fall eine Hohlleiterspule, deren Profil in einem Teilbereich nachträglich von rund auf rechteckig umgeformt wurde. Die Verbindung mehrerer solcher Wicklungsstücke zu einer ganzen Wicklung ist jedoch technisch relativ schwierig.

### Aufgabe der vorliegenden Erfindung

Es ist daher eine Aufgabe der vorliegenden Erfindung, eine elektrische Maschine mit einer aus Pins oder Hairpins gebildeten Wicklung zu schaffen, die einen hohen Füllfaktor aufweist und deren Wicklungsstücke einfach und dicht miteinander verbunden werden können.

Gelöst wird diese Aufgabe gemäß der Erfindung durch die im Anspruch 1 genannten Merkmale. Weitere Ausführungsformen der Erfindung ergeben sich aus den Unteransprüchen.

Gemäß der Erfindung wird eine elektrische Maschine vorgeschlagen mit einer Wicklung zur Erzeugung eines elektromagnetischen Feldes vorgeschlagen, die aus Wicklungsstücken in Form von Pins oder Hairpins gebildet ist. Die Wicklungsstücke haben einen ersten Abschnitt mit einem rechteckigen Profil, das an den Querschnitt einer Nut einer elektrischen Maschine angepasst ist, und zwei Endabschnitte mit einem runden Profil. Die erfindungsgemäßen Wicklungsstücke sind außerdem als Hohlleiter mit einem durchgehenden Kanal ausgebildet, durch den ein Kühlmittel geleitet werden kann. Aufgrund des speziellen Profils der Endabschnitte lassen sich die Wicklungsstücke wesentlich einfacher hydraulisch miteinander verbinden. Außerdem wird es dadurch möglich, ein hierfür erforderliches Verbindungselement an die Enden anzulöten.

Gemäß einer anderen Ausführungsform der Erfindung hat das Wicklungsstück die Form einer Haarnadel, wobei das Wicklungsstück zwei Schenkel und einen gekrümmten Übergangsbereich umfasst, der die beiden Schenkel miteinander verbindet. Jeder der Schenkel umfasst einen ersten Abschnitt mit einem Profil, das an den Querschnitt der zugehörigen Nut angepasst ist, sowie einen Endabschnitt, der ein rundes Profil aufweist. Die Enden der einzelnen Wicklungsstücke lassen sich dadurch wesentlich einfacher über Verbindungselemente mit anderen Wicklungsstücken mechanisch und hydraulisch verbinden. Das erfindungsgemäße Wicklungsstück ist ferner als Hohlleiter ausgebildet, der einen durchgehenden Kanal aufweist, durch den ein Kühlmittel geleitet werden kann.

Ein erfindungsgemäßes Wicklungsstück kann prinzipiell so dimensioniert sein, dass es eine Nut allein oder zusammen mit einem oder mehreren weiteren Wicklungsstücken, die in derselben Nut angeordnet sind, ausfüllt. Im Falle eines einzelnen Wicklungsstücks pro Nut ist das Profil des in der Nut verlaufenden (ersten) Abschnitts vorzugsweise so ausgelegt, dass der Abschnitt im Wesentlichen spielfrei in der Nut liegt. Im Falle mehrerer Wicklungsstücke pro Nut ist das Profil der in der Nut verlaufenden Abschnitte vorzugsweise so ausgelegt, das alle Wicklungsstücke gemeinsam die Nut im Wesentlichen spielfrei ausfüllen.

Die Schenkel haben an ihrem ersten Abschnitt ein rechteckiges, insbesondere quadratisches Profil, das an den Innenquerschnitt der zugehörigen Nut angepasst ist.

Ein erfindungsgemäßes Wicklungsstück ist vorzugsweise aus Kupfer, Aluminium oder einer Legierung eines der genannten Materialien hergestellt.

An seiner Außenfläche ist das erfindungsgemäße Wicklungsstück mit einer elektrisch isolierenden Schicht versehen.

Die erfindungsgemäße elektrische Maschine umfasst auch mehrere rohrförmige Verbindungselemente, die an den offenen Enden der Wicklungsstücke angeordnet sind, um die Wicklungsstücke fluidtechnisch miteinander zu verbinden. Die Verbindungselemente sind rohrförmig gebildet und haben an ihren beiden Enden jeweils einen runden Innenquerschnitt, der so dimensioniert ist, dass die Verbindungselemente jeweils auf die runden Endabschnitte der Wicklungsstücke aufgesteckt werden können.

Die erfindungsgemäßen Verbindungselemente sind vorzugsweise bogenförmig gekrümmt und können beispielsweise hufeisenförmig bzw. U-förmig ausgebildet sein.

Gemäß einer anderen Ausführungsform der Erfindung kann auch ein Verbindungselement vorgesehen sein, das mehr als zwei Wicklungsstücke miteinander verbindet. Ein solches Verbindungselement umfasst vorzugsweise Anschlüsse für mehr als zwei Wicklungsstücke. Gemäß einer speziellen Ausführungsform der Erfindung kann das Verbindungselement einen internen Sammel- oder Verteilerkanal aufweisen, der mit mehr als zwei Wicklungsstücken in Verbindung steht. Ein solches Verbindungselement mit einem Sammel- oder Verteilerkanal kann so dimensioniert sein, dass alle Wicklungsstücke einer elektrischen Maschine daran angeschlossen werden können.

### Kurze Beschreibung der Zeichnungen

Die Erfindung wird nachstehend anhand der beigefügten Zeichnungen beispielhaft näher erläutert. Es zeigen:
- Fig. 1: eine perspektivische Ansicht eines Wicklungsstücks für eine elektrische Maschine in Form einer Haarnadel;
- Fig. 2: eine Detailansicht eines Stators einer elektrischen Maschine mit mehreren haarnadelförmigen Wicklungsstücken; und
- Fig. 3: eine Ansicht eines stabförmigen Wicklungsstücks für eine elektrische Maschine.

### Ausführungsformen der Erfindung

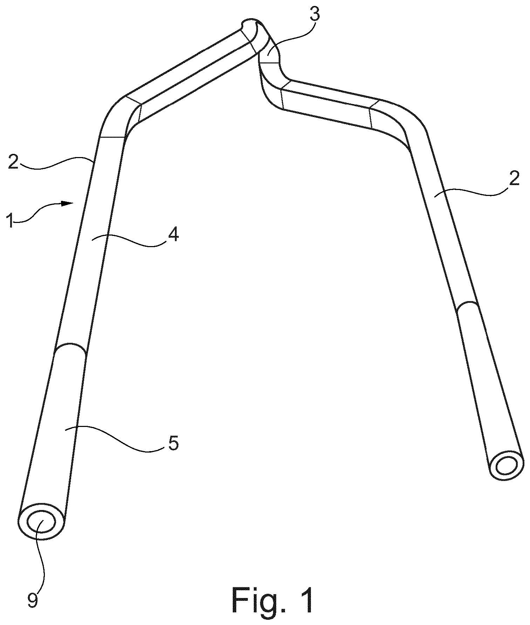

Fig. 1 zeigt eine perspektivische Ansicht eines haarnadelförmigen Wicklungsstücks für die Wicklung einer elektrischen Maschine. Derartige Wicklungsstücke 1 werden auch als Hairpins bezeichnet, da sie die Form einer Haarnadel aufweisen.

Zum Herstellen einer elektromagnetischen Wicklung einer elektrischen Maschine werden mehrere Hairpins in die Nuten eines Stators der elektrischen Maschine eingesetzt und elektrisch miteinander verbunden, um eine oder mehrere Spulen zu bilden.

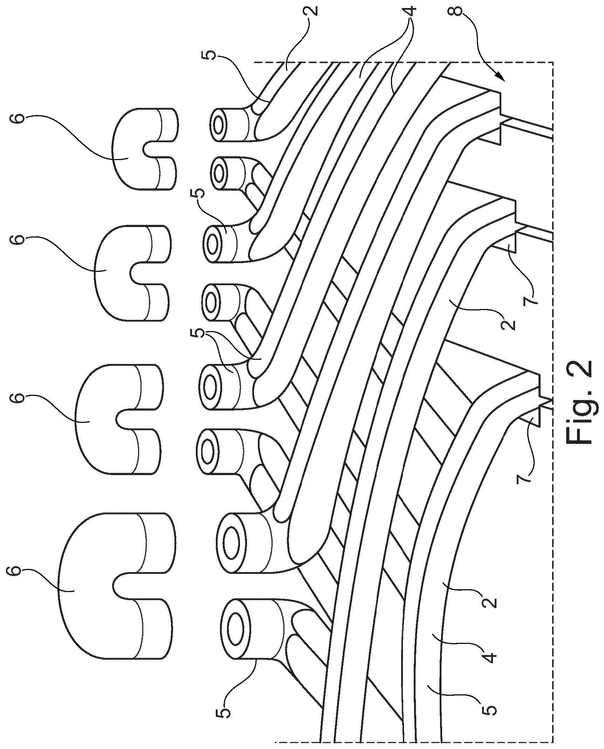

Das in Fig. 1 dargestellte Wicklungsstück 1 umfasst zwei Schenkel 2 und einen gekrümmten Übergangsbereich 3, der die beiden Schenkel 2 miteinander verbindet. Die Schenkel 2 haben dabei jeweils einen ersten Abschnitt 4 mit einem Profil, welches an den Querschnitt der Nuten der elektrischen Maschine angepasst ist, so dass sie im Wesentlichen spielfrei in der betreffenden Nut angeordnet sind. Das Profil des ersten Abschnitts 4 der Schenkel 2 ist im dargestellten Ausführungsbeispiel im Wesentlichen quadratisch, könnte beispielsweise aber auch rechteckig sein oder eine andere Form aufweisen. An ihren freien Endabschnitten 5 haben die Schenkel 2 jeweils ein rundes Profil. Dies hat den Vorteil, dass die Endabschnitte 5 einfach und sicher über rohrförmige Verbindungselemente 6, wie sie beispielhaft in Fig. 2 dargestellt sind, fluidtechnisch miteinander verbunden werden können.

Das haarnadelförmige Wicklungsstück 1 von Fig. 1 umfasst ferner einen durchgehenden Kanal 9, durch den ein Kühlmittel leitbar ist, um die Wicklung der elektrischen Maschine im Betrieb zu kühlen.

Das in Fig. 1 dargestellte Wicklungsstück 1 kann beispielsweise aus Kupfer hergestellt sein. An seiner Außenfläche ist es vorzugsweise mit einer elektrisch isolierenden Schicht versehen.

Fig. 2 zeigt eine vergrößerte Ansicht eines Kopfabschnitts eines Stators 8, wobei die aus den Nuten 7 heraus ragenden Endabschnitte 5 der Wicklungsstücke 1 gut zu erkennen sind. Um einen geschlossenen Kühlmittelkreislauf zu erhalten, sind die freien Enden bzw. Endabschnitte 5 der Wicklungsstücke 1 über mehrere rohrförmige Verbindungselemente 6 hydraulisch miteinander verbunden. Die Verbindungselemente 6 sind im dargestellten Ausführungsbeispiel U-förmig gebildet und haben an ihren offenen Enden jeweils einen runden Innendurchmesser, so dass sie auf die runden Endabschnitte 5 der Wicklungsstücke 1 aufgesteckt werden können. Die runde Ausführung hat dabei den Vorteil, dass die Verbindungselemente 6 in beliebiger Ausrichtung aufgesteckt werden können, wodurch sich der Prozess relativ einfach automatisieren lässt.

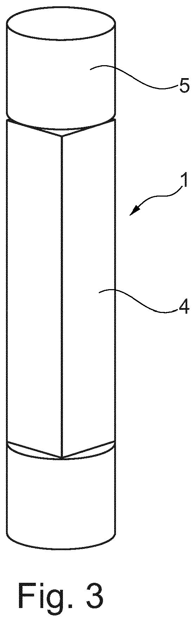

Fig. 3 zeigt schließlich noch eine Ansicht eines stabförmigen Wicklungsstücks 1 für eine elektrische Maschine. Das stabförmige Wicklungsstück 1 hat wiederum einen mitteleren Abschnitt 4 mit einem rechteckigen Profil und zwei Endabschnitte 5 mit einem runden Profil.

Hinweis: Das Projekt, das zu dieser Anmeldung geführt hat, wurde im Rahmen des Förderprogramms Horizon 2020 für Forschung und Innovation der EU im Rahmen der Finanzhilfevereinbarung Nr. 804219 gefördert.

## Patentansprüche

1. Elektrische Maschine mit einer Wicklung zur Erzeugung eines elektromagnetischen Feldes, die aus Wicklungsstücken (1) in Form von Pins oder Hairpins gebildet ist, die dazu vorgesehen sind, in eine oder mehrere Nuten (7) einer elektrischen Maschine eingesetzt zu werden, wobei die Wicklungsstücke (1) als Hohlleiter mit einem durchgehenden Kanal (9) ausgebildet sind, durch den ein Kühlmittel geleitet werden kann,
**dadurch gekennzeichnet, dass**
- die Wicklungsstücke (1) einen ersten Abschnitt (4) mit einem rechteckigen Profil und zwei Endabschnitte (5) mit einem runden Profil aufweisen, und
- die Wicklungsstücke (1) über ein oder mehrere Verbindungselemente (6) miteinander verbunden sind, die rohrförmig gebildet sind und an ihren beiden Enden jeweils einen runden Innenquerschnitt aufweisen, der an das runde Profil der Endabschnitte (5) der Wicklungsstücke (1) angepasst ist.

2. Elektrische Maschine nach Anspruch 1, **dadurch gekennzeichnet, dass** das Wicklungsstück (1) aus Kupfer, Aluminium oder einer Legierung eines der genannten Materialien hergestellt ist.

3. Elektrische Maschine nach Anspruch 1, **dadurch gekennzeichnet, dass** die Verbindungselemente (6) bogenförmig gekrümmt sind.

4. Elektrische Maschine nach Anspruch 1, **dadurch gekennzeichnet, dass** wenigstens eines der Verbindungselemente (6) Anschlüsse für mehr als zwei Wicklungsstücke (1) aufweist.

5. Elektrische Maschine nach Anspruche 1, **dadurch gekennzeichnet, dass** wenigstens eines der Verbindungselemente (6) einen internen Sammel- und/oder Verteilerkanal aufweist, der mit wenigsten drei der Anschlüsse für die Wicklungsstücke (1) in Verbindung steht.

## Claims

1. Electrical machine with a winding for generating an electromagnetic field, which is formed from winding pieces (1) in the form of pins or hairpins which are intended to be inserted into one or more slots (7) of an electrical machine, the winding pieces (1) being designed as a hollow conductor with a continuous channel (9) through which a coolant can be passed,
**characterized in that**
- the winding pieces (1) have a first section (4) with a rectangular profile and two end sections (5) with a round profile, and
- the winding pieces (1) are connected to one another via one or more connecting elements (6), which are tubular in shape and each have a round internal cross-section at their two ends, which is adapted to the round profile of the end sections (5) of the winding pieces (1).

2. Electric machine according to claim 1, **characterized in that** the winding piece (1) is made of copper, aluminum or an alloy of one of the said materials.

3. Electric machine according to claim 1, **characterized in that** the connecting elements (6) are curved in the shape of an arc.

4. Electrical machine according to claim 1, **characterized in that** at least one of the connecting elements (6) has connections for more than two winding pieces (1).

5. Electrical machine according to claim 1, **characterized in that** at least one of the connecting elements (6) has an internal collecting and/or distributing channel which is connected to at least three of the connections for the winding pieces (1).

## Revendications

1. Machine électrique avec un enroulement pour la production d'un champ électromagnétique, qui est formé de pièces d'enroulement (1) sous forme de broches ou de hairpins, qui sont prévues pour être insérées dans une ou plusieurs encoches (7) d'une machine électrique, les pièces d'enroulement (1) étant réalisées sous forme d'une conducteur creux avec un canal traversant (9), à travers lequel un agent de refroidissement peut être guidé,
**caractérisé en ce que**
- les pièces d'enroulement (1) présentent une première section (4) avec un profil rectangulaire et deux sections d'extrémité (5) avec un profil rond, et
- les pièces de d'enroulement (1) sont reliées entre elles par un ou plusieurs éléments de liaison (6) qui sont de forme tubulaire et qui présentent chacun à leurs deux extrémités une section intérieure ronde adaptée au profil rond des parties d'extrémité (5) des pièces de d'enroulement (1).

2. Machine électrique selon la revendication 1, **caractérisée en ce que** la pièce d'enroulement (1) est réalisée en cuivre, en aluminium ou en un alliage de l'un desdits matériaux.

3. Machine électrique selon la revendication 1, **caractérisée en ce que** les éléments de connexion (6) sont courbés en forme d'arc.

4. Machine électrique selon la revendication 1, **caractérisée en ce qu'**au moins un des éléments de connexion (6) présente des connexions pour plus de deux pièces d'enroulement (1).

5. Machine électrique selon la revendication 1, **caractérisée en ce qu'**au moins un des éléments de connexion (6) présente un canal collecteur et/ou distributeur interne qui communique avec au moins trois des connexions pour les pièces d'enroulement (1).
